(19) Europäisches Patentamt
European Patent Office
Office européen des brevets

(11) **EP 4 296 079 B1**

(12) **EUROPEAN PATENT SPECIFICATION**

(45) Date of publication and mention of the grant of the patent:
**02.07.2025 Bulletin 2025/27**

(21) Application number: **23171676.2**

(22) Date of filing: **04.05.2023**

(51) International Patent Classification (IPC):
***B60C 1/00*** *(2006.01)* ***C08C 19/22*** *(2006.01)*
***C08C 19/44*** *(2006.01)* ***C08F 236/06*** *(2006.01)*
***C08F 236/10*** *(2006.01)* ***C08L 7/00*** *(2006.01)*
***C08L 15/00*** *(2006.01)*

(52) Cooperative Patent Classification (CPC):
(C-Sets available)
**C08C 19/22; B60C 1/0016; C08C 19/44; C08F 236/06; C08F 236/10; C08L 7/00; C08L 15/00;** Y02T 10/86 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2022 JP 2022101545**

(43) Date of publication of application:
**27.12.2023 Bulletin 2023/52**

(73) Proprietor: **Sumitomo Rubber Industries, Ltd.**
**Kobe-shi, Hyogo 651-0072 (JP)**

(72) Inventors:
- **KAWACHI, Takahiro**
  **Kobe-shi, Hyogo, 651-0072 (JP)**
- **NAKAMURA, Kentaro**
  **Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 744 776**
**EP-A1- 4 137 331**
**WO-A1-2021/215278**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 296 079 B1

(52) Cooperative Patent Classification (CPC): (Cont.)

C-Sets
**C08F 236/06, C08F 212/08;**
**C08F 236/10, C08F 2/06;**
**C08F 236/10, C08F 4/48;**
**C08L 7/00, C08L 15/00, C08L 9/06, C08L 9/00,**
**C08L 91/00, C08L 91/08, C08K 3/04, C08K 3/36,**
**C08K 5/548, C08K 5/18, C08K 5/09, C08K 3/22,**
**C08K 3/06, C08K 5/47, C08K 5/31;**
**C08L 15/00, C08L 7/00, C08L 9/06, C08L 9/00,**
**C08L 91/00, C08L 91/08, C08K 3/04, C08K 3/36,**
**C08K 5/548, C08K 5/18, C08K 5/09, C08K 3/22,**
**C08K 3/06, C08K 5/47, C08K 5/31**

## Description

[TECHNICAL FIELD]

The present invention relates to tires.

[BACKGROUND ART]

In recent years, compact SUVs (Sport Utility Vehicles) and light commercial vehicles have become popular for solo camping. These vehicles run with a lot of luggage and under heavy loads on uneven ground (rough roads) on the way to the campsite, so they are required to have not only the low fuel consumption of conventional vehicles, but also wear resistance performance for tires used when running over uneven ground.

Regarding the wear resistance performance, improvements are being made from the aspect of the rubber composition that constitutes the tread portion (see, for example, Patent documents 1 to 3) and the shape of the contact surface of the tread portion such as the tread pattern (see, for example, Patent document 4).

[Prior art documents]

[Patent document]

[Patent document 1] JP-2021-195441 A
[Patent document 2] JP-2022-13112 A
[Patent document 3] JP-2022-21502 A-
[Patent document 4] JP-2020-82904 A

[SUMMARY OF INVENTION]

[PROBLEM TO BE SOLVED BY THE INVENTION]

However, the wear resistance performance of conventional tires is not sufficient, and further improvement has been desired.

Accordingly, an object of the present invention is to improve wear resistance performance when running on uneven ground.

[MEANS FOR SOLVING THE PROBLEM]

The present invention is

a tire having a tread portion, wherein
the cap rubber layer forming the tread portion contains styrene-butadiene rubber (SBR), isoprene-based rubber, and silica;
the content of the styrene-butadiene rubber (SBR) in 100 parts by mass of the rubber component is 40 parts by mass or more and 60 parts by mass or less, and the styrene content is 25% by mass or less;
the content of the isoprene-based rubber in 100 parts by mass of the rubber component is more than 30 parts by mass;
the content of the silica with respect to 100 parts by mass of the rubber component is 60 parts by mass or less; and
the thickness of the tread portion is 9.4 mm or less.

[EFFECT OF THE INVENTION]

According to this invention, the wear resistance performance when running on an uneven ground can be improved.

[EMBODIMENTS FOR CARRYING OUT THE INVENTION]

[1] Features of the tire according to the present invention

First, the features of the tire according to the present invention will be explained.

1. Overview

A tire according to the present invention is a tire having a tread portion, and a cap rubber layer forming the tread portion contains styrene-butadiene rubber (SBR), isoprene-based rubber, and silica. The content of the styrene-butadiene rubber (SBR) in 100 parts by mass of the rubber component is 40 parts by mass or more and 60 parts by mass or less, and the styrene content is 25% by mass or less. The content of the isoprene-based rubber in 100 parts by mass of the rubber component is more than 30 parts by mass, and the content of silica with respect to 100 parts by mass of the rubber component is 60 parts by mass or less. Furthermore, the thickness of the tread portion is 9.4 mm or less.

Here, the tread portion is a member in the region forming the ground contact surface of the tire, and refers to the portion radially outside of members containing fiber materials such as the carcass, belt layer, and belt reinforcing layer. The cap rubber layer refers to a rubber layer provided radially outward of the tire, but is not limited to the rubber layer forming the outermost layer of the tread portion. If there are two or more layers within 5mm from the tread surface toward the inside, at least any one layer satisfies the requirements of the rubber composition.

By having these features, as will be described later, it is possible to further improve the wear resistance performance when running on uneven ground.

2. Mechanism of effect expression in the tire according to the present invention

The mechanism of effect manifestation in the tire according to the present invention is considered as follows.

As a method for suppressing tire wear, there is a method for suppressing heat generation in the cap rubber layer by using silica as a filler for the cap rubber layer. However, in the case of using silica , if the content of silica increases, brittle fracture of the rubber is caused, and on the contrary, progress of wear is accelerated, although heat generation is suppressed.

On the other hand, when the content of silica is kept to 60 parts by mass or less with respect to 100 parts by mass of the rubber component, a network in which the rubber component is reinforced with silica is formed. This makes it possible to suppress the occurrence of brittle fracture and suppress heat generation.

At the same time, by adding 40 parts by mass or more and 60 parts by mass or less of SBR and more than 30 parts by mass of isoprene rubber to 100 parts by mass of the rubber component, a phase separation structure of isoprene rubber and SBR is formed, and micro phases with different hardness are mixed inside the rubber phase. As a result, input due to the deformation that occurs on the tire surface due to being caught by bumps on uneven ground surfaces is relieved at the phase interface, and reinforcing properties are also obtained through the formation of the silica network.

In addition, heat generation is suppressed by keeping the styrene content of SBR to 25% by mass or less. In addition, small amounts of styrene moieties are produced in the rubber component. As a result, styrene domains are easily formed, and input due to deformation occurring on the tire surface is alleviated at interfaces between the styrene domains and other molecular chains as well.

Furthermore, by setting the thickness of the tread portion to 9.4 mm or less, the rigidity of the entire tread portion is improved, and deformation on the tread surface is suppressed.

As a result, the deformation on the surface of the tread is reduced, the force caused by deformation is reduced, and the reinforcing effect by silica is easily obtained, so it is considered that the wear resistance performance when running on uneven ground will be improved.

The content of SBR in 100 parts by mass of the rubber component of the cap rubber layer is more preferably 44 parts by mass or more, further preferably 45 parts by mass or more, further preferably 49 parts by mass or more, and further preferably 50 parts by mass or more. On the other hand, it is more preferably 59.4 parts by mass or less, even more preferably 59.2 parts by mass or less, even more preferably 57 parts by mass or less, and even more preferably 55 parts by mass or less.

Also, the styrene content of SBR is preferably 23.5 % by mass or less, more preferably 23% by mass or less, further preferably 22% by mass or less, further preferably 21% by mass or less, further preferably 20.5% by mass or less, further preferably 20% by mass or less, further preferably 15% by mass or less, and further preferably 13.4 % by mass or less. On the other hand, as the lower limit, it is preferably 3% by mass or more, more preferably 5% by mass or more, and further preferably 8% by mass or more.

In the present invention, that the styrene content of SBR is 25% by mass or less means that the styrene content in the entire SBR is 25% by mass or less. That is, when a styrene-containing polymer (SBR) is contained alone in the rubber component, it indicates that the styrene content in the polymer is 25% by mass or less, and when multiple styrene-containing polymers (SBR) are contained in the rubber component, it shows that the styrene content obtained from the

sum of the product of the styrene content (mass%) in each polymer and the compounding amount (mass parts) per 100 mass parts of the rubber component of the polymer is 25 mass% or less.

More specifically, when 100 parts by mass of the rubber component contains SBR1 (X1 parts by mass) with a styrene content of S1 mass% and SBR2 (X2 parts by mass) with a styrene content of S2 mass%, it is indicated that the styrene content calculated from the formula $\{(S1 \times X1) + (S2 \times X2)\} / (X1+X2)$ is 25% by mass or less.

In addition, in the vulcanized rubber composition, it is possible to calculate the amount of styrene by determining the amount of styrene contained in the rubber component after acetone extraction by solid-state nuclear magnetic resonance (solid-state NMR) or Fourier transform infrared spectrophotometer (FTIR).

The content of the isoprene-based rubber in 100 parts by mass of the rubber component of the cap rubber layer is more preferably 31 parts by mass or more, further preferably 35 parts by mass or more, and further preferably 40 parts by mass or more. On the other hand, it is more preferably 51 parts by mass or less, more preferably 50 parts by mass or less, and further preferably 46 parts by mass or less.

The content of silica with respect to 100 parts by mass of the rubber component is more preferably 50 parts by mass or less, and further preferably 45 parts by mass or less.

Moreover, the thickness of the tread portion is more preferably 9.0 mm or less.

Here, the thickness of the tread portion refers to the thickness of the tread portion on the tire equatorial plane in the cross section in the tire radial direction. When the tread portion is formed of a single rubber composition, it refers the thickness of the rubber composition, and in the case of a laminated structure of multiple rubber compositions, which is described later, it refers to the total thickness of these layers. When the tire has a groove on the equatorial plane, it refers to the thickness from the intersection of a straight line connecting the radially outermost end points of the groove with the tire equatorial plane to the radially innermost interface of the tread portion.

The thickness of the tread portion can be measured by aligning the bead portion with the standardized rim width in a cross section obtained by cutting the tire in the radial direction.

Here, the "thickness of the cap rubber layer" refers to the thickness of the cap rubber layer on the tire equatorial plane in the tire radial cross section. In case the tire has a groove on the equatorial plane, it refers to the thickness from the intersection of the straight line connecting the radially outermost endpoints of the groove and the tire equatorial plane to the interface with the innermost base rubber layer of the tread portion in the radial direction of the tire. The "thickness of the base rubber layer" refers to the thickness from the interface with the cap rubber layer to the innermost interface in the tire radial direction of the tread portion.

The thickness of the cap rubber layer and the thickness of the base rubber layer can be calculated by obtaining the thickness of the cap rubber layer and the thickness of the base rubber layer in the thickness of the tread portion, as described-above. When a groove exists on the tire equatorial plane, it can be obtained by calculating the thickness of the cap rubber layer and the thickness of the base rubber layer at the center of the land portion of the tread portion closest to the equatorial plane.

The "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

[2] More preferable embodiment of the tire according to the present invention

The tire according to the present invention can obtain a larger effect by taking the following embodiment.

1. Loss tangent of the cap rubber layer at 30°C (30°C tan δ)

In the present invention, 30°C tan δ of the cap rubber layer, that is, a loss tangent of the cap rubber layer measured under conditions of temperature 30°C, frequency 10Hz, initial strain 5%, dynamic strain rate 1%, and deformation mode: tensile is preferably 0.15 or less, more preferably 0.14 or less, further preferably 0.136 or less, further preferably 0.135 or less, further preferably 0.132 or less, and further preferable 0.13 or less.

Tan δ is a viscoelastic parameter that indicates energy absorption performance, and the absorbed energy is converted into heat. Therefore, by making the 30°C tan δ of the cap rubber layer as low as this, it is possible to suppress heat generation, suppress deterioration of breaking properties due to temperature rise, and reduce wear. And the 30°C tan δ is more preferably 0.129 or less, further preferably 0.127 or less, further preferably 0.126 or less, further preferably 0.12 or less, further preferably 0.114 or less, further preferably 0.112 or less, further preferably 0.11 or less, further preferably

0.105 or less, and further preferably 0. 094 or less.

In the above, the loss tangent (tan δ) can be measured, for example, using a viscoelasticity measuring device such as "Eplexor (registered trademark)" manufactured by GABO.

The 30°Ctan δ can be appropriately adjusted depending on the compounding amount and type of compounding materials described later. For example, the 30°Ctan δ can be lowered by reducing the content of SBR in the rubber component, reducing the content of styrene in the SBR component, reducing the content of fillers, reducing the content of the resin component, and increasing the content of vulcanizing agents such as sulfur and accelerators. Conversely, it can be increased by increasing the content of SBR in the rubber component, increasing the content of styrene in the SBR component, increasing the content of fillers, increasing the content of the resin component, and reducing the content of sulfur, accelerators, and the like.

As described above, it is considered possible to suppress the temperature rise in the cap rubber layer by lowering the 30°C tan δ, but, the thicker the thickness G(mm) of the tread portion, it is considered that the influence of heat accumulation in the part is likely to occur. Therefore, by setting the product of these to a certain value or less, specifically, (30°C tan δ × G) to be 1.40 or less, it is considered that heat generation and heat accumulation in the cap rubber layer can be suppressed, and it is possible to make it easier to improve wear resistance performance. The product (30°C tan δ × G) is more preferably 1.35 or less, further preferably 1.32 or less, further preferably 1.22 or less, further preferably 1.21 or less, further preferably 1.20 or less, further preferably 1.19 or less, further preferably 1.17 or less, further preferably 1.16 or less, further preferably 1.14 or less, further preferably 1.13 or less, further preferably 1.03 or less, further preferably 1.01 or less, further preferably 1.00 or less, and further preferably 0.99 or less. Although the lower limit is not particularly limited, it is preferably 0.70 or more, more preferably 0.80 or more, further preferably 0.85 or more, further preferably 0.90 or more, further preferably 0.94 or more, and further preferably 0.95 or more.

2. Rubber component

The cap rubber layer preferably contains butadiene rubber (BR) as a rubber component in addition to the SBR and isoprene rubber, described above.

BR differs in hardness from both SBR and isoprene-based rubber. When the rubber component is composed of three types of rubber (polymer), SBR, isoprene-based rubber, and BR, a microstructure is formed in which three types of rubbers with different hardness are mixed in a fine state in the cap rubber layer. The cap rubber layer is subject to localized and large impacts on uneven ground, but the formation of such a microstructure makes it difficult for impacts and cracks to propagate, and, combined with its reinforcing properties, wear is further reduced.

The content of BR in 100 parts by mass of the rubber component is preferably 5 parts by mass or more, more preferably 7 parts by mass or more, and further preferably 10 parts by mass or more. On the other hand, it is preferably 20 parts by mass or less, more preferably 15 parts by mass or less, and further preferably 13 parts by mass or less.

3. Relationship between styrene content (% by mass) and tread thickness G (mm)

As described above, when the styrene domains are appropriately formed in the cap rubber layer, it becomes easier to absorb the impact from the surface. On the other hand, when the temperature rises due to heat accumulation during rolling of the tread, the mobility will increase and it will become difficult to maintain the domain. Therefore, it is considered that, by setting amount of styrene (% by mass) sufficient with respect to the thickness G (mm) of the tread portion, it becomes easier to maintain the styrene domain in the rubber composition and improve wear resistance. Specifically, the (amount of styrene in SBR/G) is preferably 1.49 or more, more preferably 1.96 or more, further preferably 2.22 or more, further preferably 2.32 or more, further preferably 2.34 or more, further preferably 2.5 or more, further preferably 2.59 or more, further preferably 2.61 or more, further preferably 2.7 or more, and further preferably 2.78 or more. Although the upper limit is not particularly limited, it is preferably 3.5 or less, more preferably 3.2 or less, and further preferably 3.0 or less.

4. Particle size of silica contained in the cap rubber layer

In the present invention, the particle size (average primary particle size) of silica contained in the cap rubber layer is preferably 18 nm or less.

When silica having a small particle size is used as described above, the frequency of contact between silica and polymer is increased, and a high reinforcing effect can be obtained with a smaller content. This makes it possible to prevent brittle fracture more reliably.

The average primary particle size can be obtained by directly observing silica extracted from the rubber composition cut out from the tire using an electron microscope (TEM) or the like, calculating the equal cross-sectional area diameter from the area of each silica particle thus obtained, and calculating the average value.

5. Multi-layered tread

In the present invention, the tread portion may be formed of only one layer of the cap rubber layer provided on the outer side in the tire radial direction, or may be formed of two layers by providing the base rubber layer on the inner side of the cap rubber layer in the tire radial direction. In addition, it may have three layers, four layers or more. In this case, the thickness of the cap rubber layer in the entire tread portion is preferably 10% or more, and more preferably 70% or more, in consideration of sufficient incorporation of sand and soil into the grooves.

The 30°C tan $\delta$ of the base rubber layer is preferably smaller than the 30°C tan $\delta$ of the cap rubber layer. This suppresses heat generation in the entire tread portion, thereby reducing wear.

6. Acetone extractables of cap rubber layer (AE)

In the present invention, the acetone extractable amount (AE) of the cap rubber layer is preferably 10% by mass or more, more preferably 12% by mass or more, and further preferably 14% by mass or more. On the other hand, although the upper limit is not particularly limited, it is preferably 20% by mass or less, more preferably 18% by mass or less, and further preferably 16% by mass or less.

The acetone extractables (AE) can be considered as an index indicating the amount of the plasticizer component and the like in the rubber composition, and can also be considered as an index indicating the softness of the rubber composition. Therefore, by appropriately controlling the hardness of the cap rubber layer by controlling the AE amount in the cap rubber layer as described above, the impact is mitigated and heat generation due to deformation is suppressed, and, as a result, wear is reduced.

The acetone extraction amount (AE amount) can be measured according to JIS K 6229:2015. Specifically, a vulcanized rubber test piece cut out from the measurement site is immersed in acetone at room temperature and normal pressure for 72 hours, and the mass reduction rate (%) of the test piece is determined to obtain AE (% by mass).

More specifically, each vulcanized rubber test piece is immersed in acetone at room temperature and normal pressure for 72 hours to extract soluble components; the mass of each test piece before and after extraction is measured; and the acetone extraction amount can be calculated by the following formula.

Acetone extraction amount (%) = {(mass of rubber test piece before extraction - mass of rubber test piece after extraction)/(mass of rubber test piece before extraction)} $\times$ 100

Moreover, the acetone extraction amount can be appropriately changed by changing the compounding ratio of the plasticizer in the rubber composition.

7. Land ratio

In the tire according to the present invention, the land ratio in the tread portion of the tire installed on a standardized rim and having a standardized internal pressure is preferably 40% or more, more preferably 55% or more, further preferably 60% or more and further preferably 63% or more.

"Land ratio" is the ratio of the actual contact area to the virtual contact area in which all the grooves on the surface of the tread are filled. By setting the land ratio large as described above, the area in contact with the road surface becomes large, making it easier to suppress local deformation. As a result, wear is reduced and wear resistance performance can be improved. Although the upper limit of the land ratio is not particularly limited, it is preferably 95% or less.

In addition, the product of the content (parts by mass) of styrene-butadiene rubber (SBR) having a styrene content of 25% by mass or less in 100 parts by mass of the rubber component and the land ratio (%) in the tread portion is preferably 2720 or more, more preferably 2992 or more, further preferably 3000 or more, further preferably 3060 or more, further preferably 3332 or more, further preferably 3400 or more, further preferably 3740 or more, further preferably 3879 or more, further preferably 4026 or more, further preferably 4039 or more, and further preferably 4080 or more. As a result, the effects of the network of styrene domains work together to further improve wear resistance performance. Although the upper limit is not particularly limited, it is preferably 5200 or less, and more preferably 4400 or less.

The above land ratio can be obtained from the ground contact shape under the conditions of standardized rim, standardized internal pressure, and standardized load.

Specifically, the tire is installed on a standardized rim, a standardized internal pressure is applied, and the tire is allowed to stand at 25°C for 24 hours. Thereafter, an ink is printed on the tire tread surface, a standardized load is applied and then the tire tread surface is pressed against a thick paper (camber angle is 0°) to transfer the ink to the paper. Thus, the contact shape can be obtained. The transfer is made at five locations by rotating the tire by 72° in the circumferential direction. That is, the ground contact shape is obtained five times. At this time, for each of the five ground contact shapes,

the discontinuous portions with the grooves of the contour are smoothly connected, and the resulting shape is defined as a virtual contact surface.

Then, the land ratio can be obtained from (average area of the five ground contact shapes (black portions) transferred to the thick paper / average of the areas of virtual contact surfaces obtained from the five ground contact shapes) × 100 (%).

Note that, in the above, the "standardized internal pressure" is the air pressure specified for each tire by the above-mentioned standards, and is the maximum air pressure for JATMA, "INFLATION PRESSURE" for ETRTO, and the maximum value described in the table "TIRE LOAD LIMITS AT VARIOUS COLD INFLATION PRESSURES" for TRA. As in the case of "standardized rim", refer to JATMA, ETRTO, and TRA in that order, and their standards are followed. And, in the case of a tire that is not defined in the standard, it is the standardized internal pressure (however, 250 kPa or more) of another tire size (specified in the standard) for which the standardized rim is described as the standard rim. When a plurality of standardized internal pressures of 250 kPa or more are listed, the minimum value among them is referred.

In addition, the "standardized load" is the load defined for each tire by the standards in the standard system including the standard on which the tire is base and refers to the maximum mass that can be loaded on the tire, and is the maximum load capacity for JATMA, "LOAD CAPACITY" for ETRTO, and the maximum value described in "TIRE LOAD LIMITS AT VA RIOUS COLD INFLATION PRESSURES" for TRA. As in the case of "standardized internal pressure", JATMA, ETRTO, and TRA are referred to in that order, and their standards are followed. Then, in the case of a tire not specified in the standard, the standardized load WL is obtained by the following calculation.

$$V=\{(Dt/2)^2-(Dt/2-Ht)^2\}\times\pi\times Wt$$

$$W_L=0.000011\times V+175$$

$W_L$: standardized load (kg)
V: virtual volume of tire ($mm^3$)
Dt: tire outer diameter Dt (mm)
Ht: tire section height (mm)
Wt: cross-sectional width of tire (mm)

8. Aspect ratio

The aspect ratio indicates the ratio of the cross-sectional height to the tire cross-sectional width. It is considered that the larger the aspect ratio, the easier it is for the tread portions and the side portions to absorb the impact, and the easier it is to improve the wear resistance performance. On the other hand, if the aspect ratio is too high, the amount of deflection at the side portion is too large, which may lead to deterioration in steering stability performance.

Considering these points, the specific aspect ratio of the tire according to the present invention is preferably 40% or more.

On the other hand, the ratio of the silica content (parts by mass) with respect to 100 parts by mass of the rubber component to the aspect ratio is preferably 1.0 or less, more preferably 0.92 or less, further preferably 0.77 or less, and further preferably 0.69 or less. As a result, it is possible to suppress the generation of cracks due to the concentration of force on the silica portion inside the rubber, and to further improve the wear resistance performance through the cooperation of the effect of the silica network. Although the lower limit is not particularly limited, for example, it is 0.50 or more.

Note that the above aspect ratio (%) can be obtained by the following formula based on the cross-sectional height Ht (mm), the cross-sectional width Wt (mm), the tire outer diameter Dt (mm), and the rim diameter R (mm) when the internal pressure is 250 kPa.

$$\text{Aspect ratio (\%)} = (Ht/Wt) \times 100\ (\%)$$

$$Ht = (Dt - R) / 2$$

[3] Embodiment

The present invention will be specifically described below based on embodiments.

1. Rubber composition forming cap rubber layer

In the tire according to the present invention, the rubber composition forming the cap rubber layer can be obtained by appropriately adjusting the types and amounts of various compounding materials such as the rubber component, filler, softening agent, vulcanizing agent, and vulcanization accelerator described below.

(1) Compounding material

(a) Rubber component

The rubber component is not particularly limited, and rubbers (polymers) commonly used in the manufacture of tires can be used. Examples of the rubbers include diene rubbers such as isoprene-based rubber, butadiene rubber (BR), styrene butadiene rubber (SBR), and nitrile rubber (NBR); butyl-based rubber such as butyl rubber; and thermoplastic elastomers such as styrene butadiene styrene block copolymer (SBS) and styrene-butadiene block copolymer (SB).
In the present embodiment, among these, from the point of containing styrene in the rubber component, any one of styrene-based polymers such as SBR, SBS and SB is preferably contained, and more preferably SBR is contained. These styrene-based polymers may be used in combination with other rubber components, and for example, combination of SBR and isoprene-based rubber, and combination of SBR, isoprene-based rubber and BR are preferable.

(a-1) SBR

The weight average molecular weight of SBR is, for example, more than 100,000 and less than 2,000,000. Further, in the present invention, as described above, the amount of styrene in the SBR component is set to 25% by mass or less. It is more preferably 20% by mass or less, and further preferably 15% by mass or less. On the other hand, as the lower limit, it is preferably 3% by mass or more, more preferably 5% by mass or more, and further preferably 8% by mass or more.
The vinyl content (1,2-bonded butadiene content) of SBR is, for example, more than 5% by mass and less than 70% by mass. The vinyl content of SBR refers to the content of 1,2-bonded butadiene with respect to the entire butadiene portion in the SBR component. Further, structural identification of SBR (measurement of styrene content and vinyl content) can be performed using, for example, JNM-ECA series equipment manufactured by JEOL Ltd.
As described above, the content of SBR in 100 parts by mass of the rubber component is 40 parts by mass or more and 80 parts by mass or less, and more preferably 45 parts by mass or more and 55 parts by mass or less.
The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. In addition, hydrogenated SBR obtained by hydrogenating the butadiene portion of SBR may be used. Hydrogenated SBR may be obtained by subsequently hydrogenating the BR portion of SBR. Styrene, ethylene and butadiene may be copolymerized to give similar structures.
The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain end modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.
As modified SBR, for example, SBR modified with a compound (modifying agent) represented by the following formula can be used.

[Chemical 1]

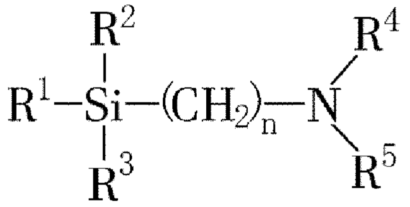

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.

As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3.

Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) - 3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;

benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;

N- substituted piperidone such as methyl-2-piperidone, N-vinyl-2-piperidone, and N-phenyl-2-piperidone;

N-substituted lactams such as

N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and

N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., ENEOS Material Co., Ltd., Asahi Kasei Co., Ltd., Zeon Co., Ltd., etc. can be used. The SBR may be used alone or in combination of two or more.

(a-2) Isoprene rubber

The cap rubber layer contains isoprene-based rubber. The content of the isoprene-based rubber in 100 parts by mass of the rubber component is more than 30 parts by mass as described above, and more preferably 40 parts by mass or more and 50 parts by mass or less.

Examples of the isoprene-based rubber include natural rubber (NR), isoprene rubber (IR), reformed NR, modified NR, and modified IR.

As the NR, for example, SIR20, RSS # 3, TSR20 and the like, which are commonly used in the tire industry, can be used. The IR is not particularly limited, and for example, IR 2200 or the like, which is commonly used in the tire industry, can be used. Reformed NR includes deproteinized natural rubber (DPNR), high-purity natural rubber (UPNR), etc., and modified NR includes epoxidized natural rubber (ENR), hydrogenated natural rubber (HNR), grafted natural rubber, etc. Examples of the modified IR include epoxidized isoprene rubber, hydrogenated isoprene rubber, and grafted isoprene rubber. These may be used alone or in combination of two or more.

(a-3) BR

In the present invention, BR may be further contained as necessary. In this case, the content of BR in 100 parts by mass of the rubber component is preferably 5 parts by mass or more, more preferably 7 parts by mass or more, and further preferably 10 parts by mass or more. On the other hand, it is preferably 20 parts by mass or less, more preferably 15 parts by mass or less, and further preferably 13 parts by mass or less.

The weight average molecular weight of BR is, for example, more than 100,000 and less than 2,000,000. The vinyl bond amount of BR is, for example, more than 1% by mass and less than 30% by mass. The cis content of BR is, for example, more than 1% by mass and less than 98% by mass. The trans content of BR is, for example, more than 1% by mass and less than 60% by mass.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.

As the BR, for example, products of Ube Industries, Ltd., ENEOS Materials, Asahi Kasei Co., Ltd., and Nippon Zeon Co., Ltd., etc. can be used.

(a-4) Other rubber components

Further, as other rubber components, rubbers (polymers) generally used for manufacturing tires, such as nitrile rubber (NBR), may be contained. When using the above SBR, isoprene-based rubber, BR and other rubber components,

an extended rubber that has been previously extended with a plasticizer component such as oil, resin or liquid rubber described below may be used.

(b) Compounding materials other than rubber components

(b-1) Filler

The rubber composition preferably contains a filler.
Specific examples of the filler include silica, carbon black, graphite, calcium carbonate, talc, alumina, clay, aluminum hydroxide, and mica. In the present invention, silica is used as described above. In addition, silica and other fillers are used in combination as necessary, and among these, using silica and carbon black in combination is preferable.

(i-1) Silica

In the present invention, silica is used as the filler. Moreover, it is preferable to contain a silane coupling agent together with silica.
The BET specific surface area of silica is preferably more than 140 $m^2/g$, and more preferably more than 160 $m^2/g$, from the viewpoint of obtaining good durability performance. On the other hand, it is preferably less than 300 $m^2/g$, from the viewpoint of obtaining good rolling resistance during high-speed running. The BET specific surface area mentioned above is the value of $N_2SA$ measured by the BET method according to ASTM D3037-93.
In the present invention, as described above, it is preferable to use silica having a particle size of 18 nm or less in the rubber composition. By using silica with a small particle size, it is possible to increase the frequency of contact with the polymer. Although the lower limit is not particularly limited, it is preferably 10 nm or more from the viewpoint of dispersibility during mixing.
As described above, the silica content is 60 parts by mass or less, preferably 50 parts by mass or less, and further preferably 45 parts by mass or less with respect to 100 parts by mass of the rubber component.
Examples of silica include dry silica (anhydrous silica) and wet silica (hydrous silica). Among them, wet silica is preferable because it has a large number of silanol groups. Silica made from water-containing glass or the like, or silica made from biomass materials such as rice husks may also be used.
As the silica, products of Evonik Industries, Rhodia Co., Ltd., Tosoh Silica Co., Ltd., Solvay Japan Co., Ltd., and Tokuyama Co., Ltd., etc. can be used.

(i-2) Silane coupling agent

When silica is used, the rubber composition preferably contains a silane coupling agent together with silica. The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl) disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

As the silane coupling agent, for example, products of Evonik Industries, Momentive Co., Ltd., Shin-Etsu Silicone Co., Ltd., Tokyo Chemical Industry Co., Ltd., Azumax Co., Ltd., Toray Dow Corning Co., Ltd., etc. can be used.
The content of the silane coupling agent is, for example, more than 3 parts by mass and less than 25 parts by mass with respect to 100 parts by mass of silica.

(ii) Carbon black

In the present invention, carbon black may be used together with silica, if necessary, such as when it is desired to enhance reinforcing properties. The specific content of carbon black with respect to 100 parts by mass of the rubber component is preferably 5 parts by mass or more, and more preferably 10 parts by mass or more. On the other hand, it is preferably 40 parts by mass or less, and more preferably 20 parts by mass or less.

Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; channel blacks (channel carbon blacks) such as EPC, MPC and CC. They may be used individually by 1 type, and may use 2 or more types together.

The CTAB (Cetyl Tri-methyl Ammonium Bromide) specific surface area of carbon black is preferably 130 $m^2$/g or more, more preferably 160 $m^2$/g or more, and further preferably 170 $m^2$/g or more. On the other hand, it is preferably 250 $m^2$/g or less, and more preferably 200 $m^2$/g or less. The CTAB specific surface area is a value measured according to ASTM D3765-92.

Specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(iii) Other fillers

The rubber composition may further contain fillers such as graphite, calcium carbonate, talc, alumina, clay, aluminum hydroxide, and mica, which are generally used in the tire industry, in addition to the above-mentioned silica and carbon black, as necessary. These contents are, for example, more than 0.1 part by mass and less than 200 parts by mass with respect to 100 parts by mass of the rubber component.

(b-2) Plasticizer component

The rubber composition may contain oil, liquid rubber, and resin as plasticizer components as components for softening rubber. The plasticizer component is a component that can be extracted from the vulcanized rubber with acetone. The total content of the plasticizer component is preferably 15 parts by mass or more, and more preferably 20 parts by mass or more, with respect to 100 parts by mass of the rubber component. On the other hand, it is preferably 35 parts by mass or less, more preferably 30 parts by mass or less, and further preferably 25 parts by mass or less. These plasticizer components also include the plasticizer component in the extensible rubber described above. For example, when the rubber component described above is an oil-extended rubber component, the amount of the oil-extended oil is included in the oil content.

(i) Oil

Examples of the oil include mineral oils (commonly referred to as process oils), vegetable oils, or mixtures thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil.

In addition, it is also possible to use a process oil with a low polycyclic aromatic compound (PCA) content for environmental protection. The low PCA content process oils include mild extractive solvates (MES), treated distillate aromatic extracts (TDAE), heavy naphthenic oils, and the like.

These may be used alone or in combination of two or more. Moreover, from the viewpoint of life cycle assessment, waste oil after being used as a lubricating oil for mixers for rubber mixing, automobile engines, etc., waste cooking oil, and the like may be used as appropriate.

Specific examples of process oil (mineral oil) include products of Idemitsu Kosan Co., Ltd., Sankyo Yuka Kogyo Co., Ltd., ENEOS Corporation, Olisoy Co., Ltd., H&R Co., Ltd., Toyokuni Seiyu Co., Ltd., Showa Shell Sekiyu Co., Ltd., and Fuji Kosan Co., Ltd.

(ii) Liquid rubber

The liquid rubber mentioned as the plasticizer is a polymer in a liquid state at room temperature (25°C) and is a polymer having a monomer similar to that of solid rubber as a constituent element. Examples of the liquid rubber include

farnesene-based polymers, liquid diene-based polymers, and hydrogenated additives thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(iii) Resin component

The resin component also functions as a tackifying component and may be solid or liquid at room temperature. Specific examples of the resin components include rosin-based resin, styrene-based resin, coumarone-based resin, terpene-based resin, C5 resin, C9 resin, C5C9 resin, and acrylic resins. Two or more of them may be used in combination. Content of the resin component is more than 2 parts by mass, preferably less than 45 parts by mass, and more preferably less than 30 parts by mass with respect to 100 parts by mass of the rubber component. These resin components may optionally be provided with modified groups capable of reacting with silica or the like.

The rosin-based resin is a resin whose main component is rosin acid obtained by processing rosin. The rosin-based resins (rosins) can be classified according to the presence or absence of modification, and can be classified into unmodified rosin (non-modified rosin) and modified rosin (rosin derivative). Unmodified rosins include tall rosin (also known as tall oil rosin), gum rosin, wood rosin, disproportionated rosin, polymerized rosin, hydrogenated rosin, and other chemically modified rosins. The modified rosin is a modified compound of a unmodified rosin, and examples thereof include rosin esters, unsaturated carboxylic acid-modified rosins, unsaturated carboxylic acid-modified rosin esters, rosin amide compounds, and rosin amine salts.

The styrene-based resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene-based resins include polyterpenes, terpene phenols, and aromatic-modified terpene resins. Polyterpene is a resin obtained by polymerizing a terpene compound and a hydrogenated product thereof. The

terpene compound is a hydrocarbon having a composition of ($C_5H_8$) n or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.

The "C9 resin" refers to a resin obtained by polymerizing a C9 fraction, which may be hydrogenated or modified. Examples of the C9 fraction include petroleum fractions having 8 to 10 carbon atoms such as vinyltoluene, alkylstyrene, indene, and methyl indene. As specific examples thereof, for example, a coumaron indene resin, a coumaron resin, an indene resin, and an aromatic vinyl resin are preferably used. As the aromatic vinyl resin, a homopolymer of α -methylstyrene or styrene or a copolymer of α -methylstyrene and styrene is preferable because it is economical, easy to process, and excellent in heat generation. A copolymer of α -methylstyrene and styrene is more preferred. As the aromatic vinyl-based resin, for example, those commercially available from Kraton, Eastman Chemical, etc. can be used.

The "C5-C9 resin" refers to a resin obtained by copolymerizing the C5 fraction and the C9 fraction, which may be hydrogenated or modified. Examples of the C5 fraction and the C9 fraction include the above-mentioned petroleum fraction. As the C5-C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present invention, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., ENEOS Co., Ltd., Arakawa Chemical Industry Co., Ltd., Taoka Chemical Industry Co., Ltd. can be used.

(b-3) Stearic acid

In the present invention, the rubber composition preferably contains stearic acid. Content of stearic acid is, for example, more than 0.5 parts by mass and less than 10.0 parts by mass with respect to 100 parts by mass of the rubber component. As the stearic acid, conventionally known ones can be used, and, for example, products of NOF Corporation, Kao Corporation, Fuji film Wako Pure Chemical Industries, Ltd., and Chiba Fatty Acid Co., Ltd., etc. can be used.

(b-4) Anti-aging agent

In the present invention, the rubber composition preferably contains an antioxidant. The content of the anti-aging agent is, for example, more than 0.5 parts by mass and less than 10 parts by mass, and more preferably 1 part by mass or more with respect to 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-5) Wax

In the present invention, the rubber composition preferably contains wax. Content of the wax is, for example, 0.5 to 20 parts by mass, preferably 1.0 to 15 parts by mass, and more preferably 1.5 to 10 parts by mass with respect to 100 parts by mass of the rubber component.

The wax is not particularly limited, and examples thereof include petroleum waxes such as paraffin wax and microcrystalline wax; natural waxes such as plant waxes and animal waxes; synthetic waxes such as polymers of ethylene and propylene. These may be used alone or in combination of two or more.

As the wax, for example, products of Ouchi Shinko Chemical Industry Co., Ltd., Nippon Seiro Co., Ltd., Seiko Chemical Co., Ltd., etc. can be used.

(b-6) Zinc oxide

The rubber composition may contain zinc oxide. Content of the zinc oxide is, for example, more than 0.5 parts by mass and less than 10 parts by mass with respect to 100 parts by mass of the rubber component. As the zinc oxide, conventionally known ones can be used, for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(b-7) Processing aid

The rubber composition may also contain processing aids. Examples of processing aids that can be used include fatty acid metal salts, fatty acid amides, amide esters, silica surfactants, fatty acid esters, mixtures of fatty acid metal salts and amide esters, and mixtures of fatty acid metal salts and fatty acid amides. For example, products of Rhein Chemie, Structol and the like can be used. These may be used alone or in combination of two or more. Among them, fatty acid metal salts are preferred.

Fatty acids constituting fatty acid metal salts include saturated or unsaturated fatty acids (preferably saturated or unsaturated fatty acids having 6 to 28 carbon atoms (more preferably 10 to 25 carbon atoms, still more preferably 14 to 20 carbon atoms)). Examples include lauric acid, myristic acid, palmitic acid, stearic acid, oleic acid, linoleic acid, linolenic acid, arachidic acid, behenic acid, and nervonic acid. These can be used singly or in combination of two or more. Among them, saturated fatty acids are preferred, and saturated fatty acids having 14 to 20 carbon atoms are more preferred.

Examples of metals constituting the fatty acid metal salt include alkali metals such as potassium and sodium, alkaline earth metals such as magnesium, calcium and barium, zinc, nickel, and molybdenum. These may be used alone or in combination of two or more. Among them, zinc is preferable.

The content of the processing aid is preferably 0.5 parts by mass or more, more preferably 1.5 parts by mass or more, and even more preferably 2 parts by mass or more with respect to 100 parts by mass of the rubber component. On the other hand, it is preferably 8 parts by mass or less, more preferably 6 parts by mass or less, and even more preferably 4 parts by mass or less.

(b-8) Cross-linking agent and vulcanization accelerator

The rubber composition preferably contains a cross-linking agent such as sulfur. Content of the cross-linking agent is, for example, more than 0.1 parts by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., and KA9188 (1,6-bis (N, N'-dibenzylthiocarbamoyldithio) hexane) manufactured by Lanxess; and organic peroxides such as dicumyl peroxide.

The rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, and N,N'-diisopropyl-2-benzothiazolesulfenamide; and
guanidine-based vulcanization accelerators such as diphenylguanidine, di-ortho-tolylguanidine and ortho-tolylbiguanidine.

These may be used alone or in combination of two or more.

(b-9) Others

In addition to the above components, the rubber composition may contain additives commonly used in the tire industry, such as fatty acid metal salts, carboxylic acid metal salts, organic peroxides, anti-reversion agents may be further contained, if desired. Content of these additives is, for example, more than 0.1 parts by mass and less than 200 parts by mass with respect to 100 parts by mass of the rubber component.

(2) Production of rubber composition for forming cap rubber layer

The rubber composition forming the cap rubber layer is prepared by appropriately adjusting the various compounding materials described above and performing a general method, for example, a manufacturing method having a base kneading step of kneading a rubber component and a filler such as carbon black, and a finish kneading step of kneading the kneaded product obtained in the base kneading step and a cross-linking agent.

Kneading can be performed using, for example, a known (closed) kneader such as a Banbury mixer, kneader, and open roll.

The kneading temperature in the base kneading step is, for example, higher than 50°C and lower than 200°C, and the kneading time is, for example, more than 30 seconds and less than 30 minutes. In the base kneading step, in addition to the above components, compounding agents conventionally used in the rubber industry, such as softeners such as oils, zinc oxide, anti-aging agents, waxes, and vulcanization accelerators, may be appropriately added and kneaded as desired.

In the finish kneading step, the kneaded material obtained in the base kneading step and a cross-linking agent are kneaded. The kneading temperature in the finish kneading step is, for example, higher than room temperature and lower than 80°C, and the kneading time is, for example, more than 1 minute and less than 15 minutes. In the finish kneading step, in addition to the above components, a vulcanization accelerator, zinc oxide, and the like may be appropriately added and kneaded as desired.

2. Manufacture of tires

The tire according to the present invention can be produced as an unvulcanized tire by forming a tread rubber having a predetermined shape using the rubber composition obtained above as a cap rubber layer, and then forming the tire together with other tire members by an ordinary method on a tire molding machine.

When the tread portion is to have a multi-layered structure with the base rubber layer, a rubber composition

forming a base rubber layer can be obtained, basically, by using the above-described rubber component and compounding materials, appropriately changing the compounding amount, and kneading in the same manner. Then, it is extruded together with a cap rubber layer and molded into a tread rubber of a predetermined shape, and then molded together with other tire members on a tire molding machine by a normal method to produce an unvulcanized tire.

Specifically, on the molding drum, the inner liner as a member to ensure the airtightness of the tire, the carcass as a member to withstand the load, impact, and filling air pressure received by the tire, a belt member as a member to strongly tighten the carcass to increase the rigidity of the tread, and the like are wound, both ends of the carcass are fixed to both side edges, a bead portion as a member for fixing the tire to the rim is arranged, and formed into a toroid shape. Then the tread is pasted on the center of the outer circumference, and the sidewall is pasted on the radial outer side to form the side portion. Thus, an unvulcanized tire is produced.

Then, the unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes or and less than 15 minutes

The above tires are not limited to any particular category, and it can be suitably used as passenger car tires, large passenger car tires, large SUV tires, truck and bus tires, motorcycle tires, racing tires, studless tires (winter tires), all-season tires, run-flat tires, aircraft tires, mining tires, non-pneumatic tire, etc. Moreover, it is preferable to set it as a pneumatic tire. As described above, since the resulting tire has improved wear resistance when running on uneven ground surfaces, in particular, it is suitable for small SUVs, which have become popular for solo camping in recent years, and for light commercial vehicles.

[Example]

Examples considered to be preferable when implementing the present invention are shown below, but the scope of the present invention is not limited to these examples. In the examples, a pneumatic tire (tire size: 215/65R17 (Aspect ratio: 65%, land ratio: 68 %)) made from a composition obtained by using various chemicals mentioned below and changing the formulation according to each Table were evaluated. The results calculated based on the following evaluation methods are shown in Tables 2 to 4.

1. Rubber composition forming cap rubber layer

(1) Compounding material

(a) Rubber component

(a-1) NR: TSR20
(a-2) SBR-1: HPR840 (S-SBR) manufactured by ENEOS Material Co., Ltd. (Styrene content: 10% by mass, vinyl content: 42% by mass)
(a-3) SBR-2: Modified S-SBR obtained by the method shown in the next paragraph (Styrene content: 25% by mass, vinyl content: 25% by mass)
(a-4) BR: Ubepol BR150B (Hi-cis BR) from Ube Industries, Ltd. (cis content 97% by mass, trans content 2% by mass, vinyl content 1% by mass)

(Manufacture of SBR-2)

The above SBR-2 is produced according to the following procedure. First, two autoclaves having an internal volume of 10 L, having an inlet at the bottom and an outlet at the top, equipped with a stirrer and a jacket, were connected in series as reactors. Butadiene, styrene, and cyclohexane were each mixed in a predetermined ratio. This mixed solution is passed through a dehydration column filled with activated alumina, mixed with n-butyllithium in a static mixer to remove impurities. Then, it is continuously supplied from the bottom of the first reactor, further 2,2-bis(2-oxolanyl)propane as a polar substance and n-butyllithium as a polymerization initiator are continuously supplied at a predetermined rate from the bottom of the first reactor, and the internal temperature of the reactor is kept at 95°C. The polymer solution is continuously withdrawn from the top of the first reactor and supplied to the second reactor. The temperature of the second reactor is kept at 95°C, and a mixture of tetraglycidyl-1,3-bisaminomethylcyclohexane (monomer) as a modifier and an oligomer component is continuously added, as a 1000-fold dilution of cyclohexane, at a predetermined rate to carry out the denaturation reaction. This polymer solution is continuously withdrawn from the reactor, an antioxidant is added continuously by a static mixer, and the solvent is removed to obtain the desired modified diene polymer (SBR-2).

The vinyl content (unit: mass%) of the SBR-2 is determined by infrared spectroscopy from the absorption intensity near 910 $cm^{-1}$, which is the absorption peak of the vinyl group. Also, the styrene content (unit: % by mass) is determined from the refractive index according to JIS K6383:

(b) Compounding materials other than rubber components

(b-1) Carbon black (CB): VULCAN10H manufactured by Cabot Japan Co., Ltd. (N134, $N_2SA$: $144m^2/g$)
(b-2) Silica: Ultrasil VN3 manufactured by Evonik Industries ($N_2SA$: 175 $m^2/g$, average primary particle size: 18 nm)
(b-3) Silane coupling agent: Si266 manufactured by Evonik Industries (bis (3-triethoxysilylpropyl) disulfide)
(b-4) Oil: VivaTec400 (TDAE oil) manufactured by H&R Co., Ltd.
(b-5) Wax: Ozoace 0355 (special paraffin wax) manufactured by Nippon Seiro Co., Ltd.
(b-6) Anti-aging agent: Antigen 6C manufactured by Sumitomo Chemical Co., Ltd. (N-(1,3-dimethylbutyl)-N'-phenyl-p-phenylenediamine)
(b-7) Stearic acid: bead stearic acid "Tsubaki" manufactured by NOF Corporation
(b-8) Zinc oxide: zinc oxide No. 1 manufactured by Mitsui Mining & Smelting Co., Ltd.
(b-9) Sulfur: powdered sulfur manufactured by Karuizawa Sulfur Co., Ltd.
(b-10) Vulcanization Accelerator-1: Nocceler CZ manufactured by Ouchi Shinko Chemical Industry Co., Ltd. (N-cyclohexyl-2-benzothiazylsulfenamide (CBS))
(b-11) Vulcanization accelerator-1: Nocceler D manufactured by Ouchi Shinko Chemical Industry Co., Ltd. (N,N'-diphenylguanidine)

(2) Rubber composition forming cap rubber layer

Using a Banbury mixer, materials other than sulfur and a vulcanization accelerator are kneaded at 150°C for 5 minutes according to the formulations shown in Tables 2 to 4 to obtain a kneaded product. Note that, each compounding quantity is a mass part.
Next, sulfur and a vulcanization accelerator are added to the kneaded product, and kneaded at 80°C for 5 minutes using an open roll to obtain a rubber composition forming a cap rubber layer.

2. Rubber composition forming base rubber layer

In parallel, a rubber composition for forming the base rubber layer is obtained based on the formulation shown in Table 1 in the same manner as the rubber composition for forming the cap rubber layer.

[Table 1]

| Compounding material | Compounding amount (parts by mass) |
|---|---|
| NR (TSR20) | 70 |
| BR (UBEPOL-BR150B manufactured by Ube Industries, Ltd.) | 30 |
| Carbon black (Show Black N330T manufactured by Cabot Japan Co., Ltd.) | 35 |
| Stearic acid ("Tsubaki" stearic acid manufactured by NOF Corporation) | 2 |
| Zinc oxide (Zinc white No.1 manufactured by Mitsui Mining & Smelting Co., Ltd.) | 4 |
| Wax (Sannok wax manufactured by Ouchi Shinko Chemical Co., Ltd.) | 2 |
| Antiaging agent (Nocrac 6C manufactured by Ouchi Shinko Chemical Industry Co., Ltd) | 3 |
| Antiaging agent (Antage RD manufactured by Kawaguchi Chemical Industry Co., Ltd.) | 1 |
| Sulfur (powder sulfur manufactured by Tsurumi Chemical Industry Co., Ltd.) | 1.7 |

(continued)

| Compounding material | Compounding amount (parts by mass) |
|---|---|
| Vulcanization accelerator (Nocceler CZ-G manufactured by Ouchi Shinko Chemical Industry Co., Ltd.) | 1.2 |

3. Pneumatic tire

Using each rubber composition, the rubber composition is extruded in a predetermined shape so that (thickness of cap rubber layer (mm) / thickness of base rubber layer (mm)) is 90/10 to form the tread portion having the total thickness G (mm) shown in Tables 2 to 4.

After that, an unvulcanized tire was formed by pasting the tread portion together with other tire members, press vulcanized for 10 minutes at 170°C, and each pneumatic tire (test tire) of Examples 1 to 10 and Comparative examples 1 to 5 shown in Tables 2 to 4 is manufactured.

4. Calculation of parameters

The following parameters are then determined for each test tire.

(1) 30°C tan δ

From the cap rubber layer of the tread portion of each test tire, a rubber test piece for viscoelasticity measurement is prepared by cutting a size of 20 mm in length × 4 mm in width × 2 mm in thickness so that the tire circumferential direction is the long side. For each of the rubber test piece, 30°C tan δ is measured using Eplexor series manufactured by GABO under the conditions of frequency of 10Hz, initial strain of 5%, dynamic strain of 1%, and deformation mode: tensile, at a measurement temperature of 30°C. The 30°Ctan δ of the base rubber layer is 0.07.

Then, 30°C tan δ × G is calculated.

(2) Other parameters

In addition, based on the specifications and formulated contents of each test tire, (styrene content in SBR / G), (SBR content × land ratio), and (silica content / aspect ratio) are calculated.

5. Performance evaluation (uneven ground wear resistance performance)

Each test tire is installed on a standardized rim and inflated to a standardized internal pressure (250kPa), then mounted on all wheels of a test vehicle (displacement 2000cc, front-wheel drive vehicle) and run on uneven ground at 50km/h for 4 hours. After that, the groove depth of the tread portion is measured to obtain the degree of reduction. Then, the running distance corresponding to the 1 mm decrease in the groove depth is calculated.

Assuming that the result in Comparative Example 3 is 100, the results are indexed based on the following formula to evaluate the wear resistance performance during running on uneven ground. The larger the numerical value, the better the wear resistance performance in running on uneven ground (uneven ground wear resistance performance).

$$\text{Uneven ground wear resistance performance} = [(\text{result of each test tire}) / (\text{result of Comparative Example 3})] \times 100$$

[Table 2]

| | EXAMPLE | | | | | | | | | |
|---|---|---|---|---|---|---|---|---|---|---|
| | 1 | 2 | 3 | 4 | 5 | 6 | 7 | 8 | 9 | 10 |
| Formulation of cap rubber layer | | | | | | | | | | |
| NR | 40 | 35 | 35 | 35 | 35 | 50 | 50 | 50 | 51 | 46 |
| SBR-1 | 10 | 15 | 15 | 15 | 15 | 5 | 5 | 5 | 0 | 5 |

(continued)

| | EXAMPLE | | | | | | | | | |
|---|---|---|---|---|---|---|---|---|---|---|
| | 1 | 2 | 3 | 4 | 5 | 6 | 7 | 8 | 9 | 10 |
| Formulation of cap rubber layer | | | | | | | | | | |
| SBR-2 | 40 | 40 | 40 | 40 | 40 | 40 | 40 | 40 | 44 | 44 |
| BR | 10 | 10 | 10 | 10 | 10 | 5 | 5 | 5 | 5 | 5 |
| CB | 10 | 10 | 10 | 10 | 10 | 10 | 10 | 10 | 10 | 10 |
| Silica | 60 | 45 | 50 | 45 | 60 | 50 | 45 | 60 | 50 | 45 |
| Coupling agent | 4.8 | 3.6 | 4 | 3.6 | 4.8 | 4 | 3.6 | 4.8 | 4 | 3.6 |
| Oil | 20 | 20 | 20 | 20 | 20 | 20 | 20 | 20 | 21 | 21 |
| Wax | 1.5 | 1.5 | 1.5 | 1.5 | 1.5 | 1.5 | 1.5 | 1.5 | 1.5 | 1.5 |
| Anti-aging agent | 2 | 2 | 2 | 2 | 2 | 2 | 2 | 2 | 2 | 2 |
| Stearic acid | 2 | 2 | 2 | 2 | 2 | 2 | 2 | 2 | 2 | 2 |
| Zinc oxide | 2.5 | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.5 | 1.5 | 1.5 |
| Vulcanization accelerator-1 | 2.5 | 2.5 | 2.5 | 2.5 | 2.5 | 2.5 | 2.5 | 2.5 | 2.5 | 2.5 |
| Vulcanization accelerator-2 | 2 | 2 | 2 | 2 | 2 | 2 | 2 | 2 | 2 | 2 |
| Parameter | | | | | | | | | | |
| SBR content (parts by mass) | 50 | 55 | 55 | 55 | 55 | 45 | 45 | 45 | 44 | 49 |
| Amount of styrene in SBR (% by mass) | 21 | 21 | 21 | 21 | 21 | 23 | 23 | 23 | 25 | 23 |
| 30°C tan δ | 0.140 | 0.105 | 0.114 | 0.105 | 0.126 | 0.105 | 0.094 | 0.127 | 0.129 | 0.112 |
| Tread thickness G (mm) | 9.4 | 9.4 | 9.0 | 9.0 | 9.0 | 9.0 | 9.0 | 9.0 | 9.0 | 9.0 |
| 30°C tan δ × G | 1.32 | 0.99 | 1.03 | 0.95 | 1.13 | 0.94 | 0.85 | 1.14 | 1.16 | 1.01 |
| Amount of styrene in SBR / G | 2.34 | 2.22 | 2.32 | 2.32 | 2.32 | 2.59 | 2.59 | 2.59 | 2.78 | 2.61 |
| SBR content × land ratio | 3400 | 3740 | 3740 | 3740 | 3740 | 3060 | 3060 | 3060 | 2992 | 3332 |
| Silica content × Aspect ratio | 3900 | 2925 | 3250 | 2925 | 3900 | 3250 | 2925 | 3900 | 3250 | 2925 |
| Silica content / Aspect ratio | 0.92 | 0.69 | 0.77 | 0.69 | 0.92 | 0.77 | 0.69 | 0.92 | 0.77 | 0.69 |
| Performance evaluation | | | | | | | | | | |
| Uneven ground wear resistance performance | 116 | 123 | 125 | 119 | 131 | 138 | 131 | 144 | 150 | 144 |

[Table 3]

| | EXAMPLE | | | | |
|---|---|---|---|---|---|
| | 11 | 12 | 13 | 14 | 15 |
| Formulation of cap rubber layer | | | | | |
| NR | 50 | 35 | 31 | 31 | 35 |
| SBR-1 | 4 | 20 | 29 | 45.6 | 17 |
| SBR-2 | 36 | 40 | 30.4 | 13.6 | 40 |
| BR | 10 | 5 | 9.6 | 9.8 | 8 |
| CB | 10 | 10 | 10 | 10 | 10 |
| Silica | 60 | 60 | 60 | 60 | 60 |
| Coupling agent | 4.8 | 4.8 | 4.8 | 4.8 | 4.8 |
| Oil | 19 | 20 | 17.6 | 13.4 | 20 |
| Wax | 1.5 | 1.5 | 1.5 | 1.5 | 1.5 |
| Anti-aging agent | 2 | 2 | 2 | 2 | 2 |
| Stearic acid | 2 | 2 | 2 | 2 | 2 |
| Zinc oxide | 2.5 | 2.5 | 2.5 | 2.5 | 2.5 |
| Sulfur | 1.5 | 1.5 | 1.5 | 1.5 | 1.5 |
| Vulcanization accelerator-1 | 2.5 | 2.5 | 2.5 | 2.5 | 2.5 |
| Vulcanization accelerator-2 | 2 | 2 | 2 | 2 | 2 |
| Parameter | | | | | |
| SBR content (parts by mass) | 40 | 60 | 59.4 | 59.2 | 57 |
| Amount of styrene in SBR (% by mass) | 23.5 | 20.0 | 17.7 | 13.4 | 20.5 |
| 30°C tan $\delta$ | 0.15 | 0.135 | 0.132 | 0.130 | 0.136 |
| Tread thickness G (mm) | 9 | 9 | 9 | 9 | 9 |
| 30°C tan $\delta \times$ G | 1.35 | 1.21 | 1.19 | 1.17 | 1.22 |
| Amount of styrene in SBR / G | 2.61 | 2.22 | 1.96 | 1.49 | 2.28 |
| SBR content $\times$ Land ratio | 2720 | 4080 | 4039 | 4026 | 3879 |
| Silica content $\times$ Aspect ratio | 3900 | 3900 | 3900 | 3900 | 3900 |
| Silica content / Aspect ratio | 0.92 | 0.92 | 0.92 | 0.92 | 0.92 |
| Performance evaluation | | | | | |
| Uneven ground wear resistance performance | 138 | 131 | 125 | 119 | 131 |

[Table 4]

| | COMPARATIVE EXAMPLE | | | | | |
|---|---|---|---|---|---|---|
| | 1 | 2 | 3 | 4 | 5 | 6 |
| Formulation of cap rubber layer | | | | | | |
| NR | 30 | 30 | 30 | 40 | 30 | 25 |
| SBR-1 | 19 | 24 | 19 | 19 | 19 | 42 |
| SBR-2 | 16 | 16 | 16 | 16 | 16 | 28 |
| BR | 35 | 30 | 35 | 25 | 35 | 5 |
| CB | 10 | 10 | 10 | 10 | 10 | 10 |

(continued)

| | COMPARATIVE EXAMPLE | | | | | |
|---|---|---|---|---|---|---|
| | 1 | 2 | 3 | 4 | 5 | 6 |
| Formulation of cap rubber layer | | | | | | |
| Silica | 80 | 80 | 60 | 80 | 80 | 80 |
| Coupling agent | 6.4 | 6.4 | 4.8 | 6.4 | 6.4 | 6.4 |
| Oil | 14 | 14 | 14 | 14 | 10 | 17 |
| Wax | 1.5 | 1.5 | 1.5 | 1.5 | 1.5 | 1.5 |
| Anti-aging agent | 2 | 2 | 2 | 2 | 2 | 2 |
| Stearic acid | 2 | 2 | 2 | 2 | 2 | 2 |
| Zinc oxide | 2.5 | 2.5 | 2.5 | 2.5 | 2.5 | 2.5 |
| Sulfur | 1.5 | 1.5 | 1.5 | 1.5 | 1.5 | 1.5 |
| Vulcanization accelerator-1 | 2.5 | 2.5 | 2.5 | 2.5 | 2.5 | 2.5 |
| Vulcanization accelerator-2 | 2 | 2 | 2 | 2 | 2 | 2 |
| Parameter | | | | | | |
| SBR content (parts by mass) | 35 | 40 | 35 | 35 | 35 | 70 |
| Amount of styrene in SBR (% by mass) | 17 | 16 | 17 | 17 | 17 | 16 |
| 30°C tan $\delta$ | 0.200 | 0.196 | 0.145 | 0.201 | 0.200 | 0.173 |
| Tread thickness G (mm) | 9.6 | 9.6 | 9.6 | 9.6 | 9.0 | 9.6 |
| 30°C tan $\delta \times$ G | 1.92 | 1.88 | 1.39 | 1.93 | 1.80 | 1.66 |
| Amount of styrene in SBR / G | 1.76 | 1.67 | 1.76 | 1.76 | 1.87 | 1.67 |
| SBR content $\times$ land ratio | 2380 | 2720 | 2380 | 2380 | 2380 | 4760 |
| Silica content $\times$ Aspect ratio | 5200 | 5200 | 3900 | 5200 | 5200 | 5200 |
| Silica content / Aspect ratio | 1.23 | 1.23 | 0.92 | 1.23 | 1.23 | 1.23 |
| Performance evaluation | | | | | | |
| Uneven ground wear resistance performance | 88 | 94 | 100 | 100 | 94 | 94 |

## Claims

**1.** A tire having a tread portion, wherein

the cap rubber layer forming the tread portion contains styrene-butadiene rubber (SBR), isoprene-based rubber, and silica;
the content of the styrene-butadiene rubber (SBR) in 100 parts by mass of the rubber component is 40 parts by mass or more and 60 parts by mass or less, and the styrene content of the styrene-butadiene rubber (SBR) is 25% by mass or less;
the content of the isoprene-based rubber in 100 parts by mass of the rubber component is more than 30 parts by mass;
the content of the silica with respect to 100 parts by mass of the rubber component is 60 parts by mass or less; and the thickness of the tread portion is 9.4 mm or less.

**2.** The tire according to claim 1, wherein the styrene-butadiene rubber (SBR) in the cap rubber layer has a styrene content of 20% by mass or less.

**3.** The tire according to claim 1, wherein the cap rubber layer contains 5 parts by mass or more of butadiene rubber (BR) in 100 parts by mass of the rubber component.

4. The tire according to any one of claims 1 to 3, wherein the cap rubber layer contains silica in an amount of 50 parts by mass or less with respect to 100 parts by mass of the rubber component.

5. The tire according to any one of claims 1 to 4, wherein the silica contained in the cap rubber layer has an average primary particle size of 18 nm or less.

6. The tire according to any one of claims 1 to 5, wherein the styrene content (% by mass) in the styrene-butadiene rubber (SBR) per the thickness G (mm) of the tread portion is 2.32 or more.

7. The tire according to any one of claims 1 to 6, wherein the cap rubber layer has a loss tangent (30°C tan $\delta$) of 0.13 or less measured under the conditions of temperature of 30°C, frequency of 10 Hz, initial strain of 5%, dynamic strain rate of 1%, and deformation mode: tensile.

8. The tire according to claim 7, wherein the cap rubber layer has the 30°C tan $\delta$ of 0.11 or less.

9. The tire according to claim 7 or 8, wherein the product of the 30°C tan $\delta$ and the thickness G (mm) of the tread portion (30°C tan $\delta \times$ G) is 1.40 or less.

10. The tire according to any one of claims 1 to 9, wherein the thickness of the tread portion is 9.0 mm or less.

11. The tire according to any one of claims 1 to 10, wherein the land ratio of the tread portion is 40% or more, when the land ratio is measured as defined in the specification.

12. The tire according to claim 11, wherein the product of the land ratio (%) in the tread portion and the content (parts by mass) of styrene-butadiene rubber (SBR) in 100 parts by mass of the rubber component of the cap rubber layer (the land ratio $\times$ the content of SBR) is 3000 or more.

13. The tire according to any one of claims 1 to 12, wherein the aspect ratio is 40% or more.

14. The tire according to any one of claims 1 to 13, wherein the ratio of the silica content (parts by mass) with respect to 100 parts by mass of the rubber component to the aspect ratio (%) (the silica content / the aspect ratio) is 1.0 or less.

## Patentansprüche

1. Reifen, der einen Laufstreifenabschnitt aufweist, wobei

   die Deckkautschukschicht, die den Laufstreifenabschnitt bildet, Styrol-Butadien-Kautschuk (SBR), Isopren-basierten Kautschuk und Siliziumdioxid enthält;
   der Gehalt des Styrol-Butadien-Kautschuks (SBR) in 100 Massenteilen der Kautschukkomponente 40 Massenteile oder mehr und 60 Massenteile oder weniger beträgt, und der Styrolgehalt des Styrol-Butadien-Kautschuks (SBR) 25 Massen-% oder weniger beträgt;
   der Gehalt des Isopren-basierten Kautschuks in 100 Massenteilen der Kautschukkomponente mehr als 30 Massenteile beträgt;
   der Gehalt des Siliziumdioxids bezogen auf 100 Massenteile der Kautschukkomponente 60 Massenteile oder weniger beträgt; und
   die Dicke des Laufstreifenabschnitts 9,4 mm oder weniger beträgt.

2. Reifen nach Anspruch 1, wobei der Styrol-Butadien-Kautschuk (SBR) in der Deckkautschukschicht einen Styrolgehalt von 20 Massen-% oder weniger aufweist.

3. Reifen nach Anspruch 1, wobei die Deckkautschukschicht 5 Massenteile oder mehr an Butadienkautschuk (BR) in 100 Massenteilen der Kautschukkomponente enthält.

4. Reifen nach einem der Ansprüche 1 bis 3, wobei die Deckkautschukschicht Siliziumdioxid in einer Menge von 50 Massenteilen oder weniger bezogen auf 100 Massenteile der Kautschukkomponente enthält.

5. Reifen nach einem der Ansprüche 1 bis 4, wobei das in der Deckkautschukschicht enthaltene Siliziumdioxid eine

mittlere Primärpartikelgröße von 18 nm oder weniger aufweist.

6. Reifen nach einem der Ansprüche 1 bis 5, wobei der Styrolgehalt (Massen-%) in dem Styrol-Butadien-Kautschuk (SBR) pro Dicke G (mm) des Laufstreifenabschnitts 2,32 oder mehr beträgt.

7. Reifen nach einem der Ansprüche 1 bis 6, wobei die Deckkautschukschicht einen Verlusttangens (30°C tan $\delta$) von 0,13 oder weniger aufweist, gemessen unter den Bedingungen von Temperatur von 30°C, Frequenz von 10 Hz, anfängliche Dehnung von 5%, dynamische Dehnungsrate von 1% und Verformungsmodus: Zug.

8. Reifen nach Anspruch 7, wobei die Deckkautschukschicht den 30°C tan $\delta$ von 0,11 oder weniger aufweist.

9. Reifen nach Anspruch 7 oder 8, wobei das Produkt des 30°C tan $\delta$ und der Dicke G (mm) des Laufstreifenabschnitts (30°C tan $\delta \times$ G) 1,40 oder weniger beträgt.

10. Reifen nach einem der Ansprüche 1 bis 9, wobei die Dicke des Laufstreifenabschnitts 9,0 mm oder weniger beträgt.

11. Reifen nach einem der Ansprüche 1 bis 10, wobei der Positivprofilanteil des Laufstreifenabschnitts 40% oder mehr beträgt, wenn der Positivprofilanteil gemessen ist wie in der Beschreibung definiert.

12. Reifen nach Anspruch 11, wobei das Produkt des Positivprofilanteils (%) in dem Laufstreifenabschnitt und des Gehalts (Massenteile) an Styrol-Butadien-Kautschuk (SBR) in 100 Massenteilen der Kautschukkomponente der Deckkautschukschicht (Positivprofilanteil $\times$ SBR-Gehalt) 3000 oder mehr beträgt.

13. Reifen nach einem der Ansprüche 1 bis 12, wobei das Aspektverhältnis 40% oder mehr beträgt.

14. Reifen nach einem der Ansprüche 1 bis 13, wobei das Verhältnis des Siliziumdioxid-Gehalts (Massenteile) bezogen auf 100 Massenteile der Kautschukkomponente zu dem Aspektverhältnis (%) (Siliziumdioxid-Gehalt / Aspektverhältnis) 1,0 oder weniger beträgt.

## Revendications

1. Pneumatique ayant une partie bande de roulement, dans lequel

   la couche de caoutchouc de revêtement formant la partie bande de roulement contient du caoutchouc styrène butadiène (SBR), du caoutchouc à base d'isoprène et de la silice ;
   la teneur en caoutchouc styrène butadiène (SBR) dans 100 parties en masse de composant de caoutchouc est égale ou supérieure à 40 parties en masse et inférieure ou égale à 60 parties en masse et la teneur en styrène du caoutchouc styrène butadiène (SBR) est inférieure ou égale à 25 % en masse ;
   la teneur en caoutchouc à base d'isoprène dans 100 parties en masse de composant de caoutchouc est supérieure à 30 parties en masse ;
   la teneur en silice par rapport à 100 parties en masse de composant de caoutchouc est inférieure ou égale à 60 parties en masse ; et
   l'épaisseur de la partie bande de roulement est inférieure ou égale à 9,4 mm.

2. Pneumatique selon la revendication 1, dans lequel le caoutchouc styrène butadiène (SBR) dans la couche de caoutchouc de revêtement a une teneur en styrène inférieure ou égale à 20 % en masse.

3. Pneumatique selon la revendication 1, dans lequel la couche de caoutchouc de revêtement contient 5 parties en masse ou plus de caoutchouc butadiène (BR) dans 100 parties en masse de composant de caoutchouc.

4. Pneumatique selon l'une quelconque des revendications 1 à 3, dans lequel la couche de caoutchouc de revêtement contient de la silice dans une quantité inférieure ou égale à 50 parties en masse par rapport à 100 parties en masse de composant de caoutchouc.

5. Pneumatique selon l'une quelconque des revendications 1 à 4, dans lequel la silice contenue dans la couche de caoutchouc de revêtement a une taille particulaire primaire moyenne inférieure ou égale à 18 nm.

6. Pneumatique selon l'une quelconque des revendications 1 à 5, dans lequel la teneur en styrène (% en masse) dans le caoutchouc styrène butadiène (SBR) pour l'épaisseur G (mm) de la partie bande de roulement est égale ou supérieure à 2,32.

7. Pneumatique selon l'une quelconque des revendications 1 à 6, dans lequel la couche de caoutchouc de revêtement a une tangente de perte (tan δ à 30 °C) inférieure ou égale à 0,13 mesurée dans les conditions de température de 30 °C, de fréquence de 10 Hz, de contrainte initiale de 5 %, de taux de contrainte dynamique de 1 %, et en mode de déformation : traction.

8. Pneumatique selon la revendication 7, dans lequel la couche de caoutchouc de revêtement possède une tan δ à 30 °C inférieure ou égale à 0,11.

9. Pneumatique selon la revendication 7 ou la revendication 8, dans lequel le produit de la tan δ à 30 °C par l'épaisseur G (mm) de la partie bande de roulement (tan δ à 30 °C x G) est inférieur ou égal à 1,40.

10. Pneumatique selon l'une quelconque des revendications 1 à 9, dans lequel l'épaisseur de la partie bande de roulement est inférieure ou égale à 9,0 mm.

11. Pneumatique selon l'une quelconque des revendications 1 à 10, dans lequel le ratio de surface de contact au sol de la partie bande de roulement est égal ou supérieur à 40 %, lorsque le ratio de surface de contact au sol est mesuré tel que défini dans la spécification.

12. Pneumatique selon la revendication 11, dans lequel le produit du ratio de surface de contact au sol (%) dans la partie bande de roulement et de la teneur (parties en masse) de caoutchouc styrène butadiène (SBR) dans 100 parties en masse de composant de caoutchouc de la couche de caoutchouc de revêtement (ratio de surface de contact au sol x teneur en SBR) est égal ou supérieur à 3000.

13. Pneumatique selon l'une quelconque des revendications 1 à 12, dans lequel le ratio d'aspect est égal ou supérieur à 40 %.

14. Pneumatique selon l'une quelconque des revendications 1 à 13, dans lequel le ratio de la teneur en silice teneur (parties en masse) par rapport à 100 parties en masse de composant de caoutchouc sur le ratio d'aspect (%) (teneur en silice / ratio d'aspect) est inférieur ou égal à 1,0.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021195441 A
- JP 2022013112 A
- JP 2022021502 A
- JP 2020082904 A
- JP 2010111753 A
- US 4414370 B
- JP 59006207 A
- JP 5058805 B
- JP 1313522 A
- US 5010166 A

### Non-patent literature cited in the description

- *Toa Synthetic Research Annual Report TREND2000* (3), 42-45